Europäisches Patentamt

European Patent Office

Office européen des brevets

(11) Publication number: **0 404 960 A1**

# EUROPEAN PATENT APPLICATION
## published in accordance with Art. 158(3) EPC

(21) Application number: 89912494.5

(22) Date of filing: 08.11.89

(86) International application number:
PCT/JP89/01146

(87) International publication number:
WO 90/05168 (17.05.90 90/11)

(51) Int. Cl.⁵: **C08L 63/00, C08L 23/08, C09D 163/00, C09D 5/03**

(30) Priority: 11.11.88 JP 286370/88

(43) Date of publication of application:
02.01.91 Bulletin 91/01

(84) Designated Contracting States:
DE FR GB

(71) Applicant: **SHINTO PAINT COMPANY, LIMITED**
10-73, Minamitsukaguchi-cho 6-chome
Amagasaki-shi Hyogo 661(JP)

Applicant: **SUMITOMO CHEMICAL COMPANY, LIMITED**
5-33 Kitahama 4-chome Chuo-ku
Osaka-shi Osaka(JP)

(72) Inventor: **TODOROKI, Nobuaki**
5-692-26, Matsugaoka Nagareyama-shi
Chiba 270-01(JP)
Inventor: **NISHIZAKI, Ken**
3-6-9, Sakuradai Ichihara-shi
Chiba 299-01(JP)
Inventor: **FURUKAWA, Kazunori**
Dorufu-Aobadai 4-206 1-11-1, Aobadai
Midori-ku Yokohama-shi Kanagawa 227(JP)
Inventor: **HATO, Yuji**
1-4-17-322, Toyotamanaka Nerima-ku
Tokyo 176(JP)

(74) Representative: **Vossius & Partnerner**
Siebertstrasse 4 P.O. Box 86 07 67
D-8000 München 86(DE)

(54) **THERMOSETTING RESIN COMPOSITION AND POWDER COATING MATERIAL COMPRISING SAME.**

(57) The invention relates to a thermosetting resin composition which comprises: (a) an ethylene copolymer containing 0.5 to 10 wt % of a structure originating from an acid anhydride group-containing monomer, and 3 to 40 wt % of a structure originating from an $\alpha$, $\beta$-unsaturated carboxylic acid ester, (b) an epoxy resin, and (c) a curing agent for epoxy resins, with the compounding ratio of (a) to (b) being 0.1 to 1.0 (by weight), and a powder coating material comprising said composition. They are useful for coating those which require high anti-corrosive and anti-pitching properties, such as lower structure parts

of automobiles, building materials, industrial materials, etc.

SPECIFICATION

THERMOSETTING RESIN COMPOSITION AND POWDER COATING COMPOSITION THEREFROM

### Technical Field

The present invention relates to a thermosetting resin composition and a powder coating composition prepared therefrom, more particularly to a thermosetting resin composition and a powder coating composition which are useful for coating underfloor parts of automobiles, building materials, industrial materials, etc. which require corrosion protection and further resistance to external impact such as impact with jumped stones, so-called "anti-chipping property".

### Prior Art

The coating of the outer covering of automobiles is usually carried out by the steps of electrodeposition coating, intercoating and outercoating. Recent attention has focused on the problem of durability of the multiple coat on the outer covering of automobiles, particularly the lowering in beautiful sight of the coat and the corrosion of the steel plate of the body due to peeling off of the coat by impact during running. Especially, in cold regions in United States of America, European countries, and the like, the road is occasionally covered with gravel mixed with a large amount of comparative coarse rock salt for preventing from freezing of the road surface in winter season, and when automobiles run on such a road, the coating surface of the automobiles will be suffered from impact by the rock salt particles or stones jumped up with the wheel, by which the coat is partially injured by the impact and results in peeling off of whole coat, so-called "chipping" phenomenon. Due to this phenomenon, the metallic surface of the outer covering at the injured area of the automobiles is exposed, by which the steel plate will rust and corrode rapidly.

In order to prevent such a chipping and the corrosion of the steel plate owing thereto, there has hitherto been studied various means such as chemical treatment of the outer surface of metallic base material of the body of automobiles and the improvement of the electrodeposition coating, intercoating and outercoating compositions, but there has never been found any suitable coating composition which has excellent anti-chipping property and also has sufficient adhesion property.

There have also been proposed various means for preventing the chipping of the outer covering of automobiles, such as a method of applying an anti-chipping coating composition comprising a soft thermoplastic resin such as polyethylene powder, powder of polyethylene foam, PVC paste, bituminous substance, elastomers, and the like; and a method of using thermosetting resin coating composition having improved anti-chipping property, such as epoxy coating composition, polyester coating composition, and the like.

However, in the method of using the conventional thermoplastic resin as an anti-chipping coating composition, since the thermoplastic resin per se has little adhesion property, an anti-corrosive primer should previously be applied to the substance to be coated in order to exhibit both anti-corrosive property and adhesion property, followed by applying thereto the thermoplastic resin as an anti-chipping coating composition. Even by applying of the anti-corrosive primer, the adhesion property is still not sufficient, and hence, there are still various problems. For instance, during running of automobiles for a long period of time, there is newly a problem that the anti-chipping coating composition is peeled off from the primer. This thermoplastic anti-chipping coating composition is soft and can absorb the external energy of the jumped stones by being hurt, etc. and thereby can prevent the impact from reaching directly to the anti-corrosive primer, but there is produced a hole passing through the coating composition layer to reach to the primer layer. As a result, water penetrates through this hole between the thermoplastic resin and the anti-corrosive primer, and thereby, the weak adhesion between the thermoplastic resin and the anti-corrosive primer is further weakened. Particularly, when the penetrated water is frozen, the volume thereof expands, by which the other region having no penetration of water is also peeled off, and then, water is further penetrated into the newly peeled region. By repeating this, the peeling of the layers extends very rapidly. Moreover, according to the above method, when the jumped stones, etc. attack repeatedly at the same portion, the external energy will directly be given to the anti-corrosive coating composition through the holes of the thermosetting resin, by which crack and crazing are produced at said portion and thereby the desired anti-corrosive effect can not be obtained. Thus, this method is somewhat useful for anti-chipping coating composition, but is still not sufficient.

On the other hand, for improving the anti-chipping property of the thermosetting resin such as an epoxy resin coating composition or a polyester coating composition, various improving methods have been proposed. The thermosetting resins are originally more brittle and breakable in comparison with thermoplastic resins, but the defect is improved by blending with a soft thermoplastic resin or by using a flexible curing agent, and the composition thus improved shows satisfactory anti-chipping property at an ordinary temperature (0° to 30°C). However, in a cold region of a temperature of -20°C or lower, these methods can still not be used, because the thermosetting resins such as an epoxy resin and polyester resin have a glass transition temperature higher than that of thermoplastic resins and hence the anti-chipping coating composition prepared therefrom is as brittle and breakable as a glass in the cold region of a temperature of -20°C or lower. There have been known some compositions similar to the composition of the present invention, for example, in Japanese Patent First Publication (Kokai) Nos. 101424/1973 and 85832/1978, but these known compositions are intended to use for other purposes different from the objects of the present invention, and hence, most of them are not useful for the purpose of the present invention.

The present inventors have intensively studied as to various compositions suitable for the purpose of the present invention among the compositions disclosed in the above Japanese Patent First Publication (Kokai) No. 101424/1973 and have found that the structure and reactivity of some ethylene copolymer have very important effect and that there can be obtained a suitable thermosetting resin composition having the desired excellent properties by mixing said specific ethylene copolymers in a specific ratio, and further that the powder coating composition prepared from the above composition has excellent properties, and have accomplished the present invention.

Disclosure of the Invention

The present invention provides a thermosetting resin composition (1) and a powder coating composition (2) comprising the following components, respectively.

(1)  A thermosetting resin composition comprising the following components (a) to (c) wherein the ratio of (a)/(b) is in the range of 0.1 to 1.0 by weight:

(a)  an ethylene copolymer containing 0.5 to 10 % by weight of a structure derived from a monomer having an acid anhydride group and 3 to 40 % by weight of a structure derived from an $\alpha,\beta$-unsaturated carboxylic acid ester monomer in the molecule,

(b)  a resin having an epoxy group, and

(c)  a curing agent for an epoxy resin.

(2)  A powder coating composition prepared from a thermosetting resin composition which comprises the following components (a) to (c) wherein the ratio of (a)/(b) is in the range of 0.1 to 1.0 by weight:

(a)  an ethylene copolymer containing 0.5 to 10 % by weight of a structure derived from a monomer having an acid anhydride group and 3 to 40 % by weight of a structure derived from an $\alpha,\beta$-unsaturated carboxylic acid ester monomer in the molecule,

(b)  a resin having an epoxy group, and

(c)  a curing agent for an epoxy resin.

In the above compositions, the ethylene copolymer (a) contributes to the improvement of impact resistance, and hence, the molecular structure thereof is very important.

In order to improve the impact resistance of the composition, the ethylene copolymer should have the following properties.

(i)   It has a glass transition temperature of -20°C or lower.

(ii)   It is an elastic material suitable for relieving the impact.

(iii)   It has a functional group so as to be able to transmit the stress to the epoxy resin of the matrix, preferably it is reactive with the epoxy group.

(iv)   It has an affinity with the epoxy resin of the matrix so that it can microscopically be dispersed into the matrix resin.

(v)   It has heat resistance and chemical resistance and has less variation in the physical properties.

Among the above requirements, the items (i) and (v) are satisfied by all ethylene copolymers. The requirement (ii) is predominantly participated by the α,β-unsaturated carboxylic acid ester component. That is, when the α,β-unsaturated carboxylic acid ester component is contained in an amount of less than 3 % by weight, the copolymer has a large crystallinity at the ethylene chain region and hence has less elasticity. On the other hand, when the component is contained in an amount of more than 40 % by weight, it is no problem in the elasticity but it becomes completely non-crystalline, and further show excess tackiness and less heat resistance and chemical resistance, and hence, it is not preferable from the practical viewpoint. As to the requirement (iii), the acid anhydride component takes a role. When the acid anhydride component is contained in an amount of less than 0.5 % by weight, the ethylene copolymer has less functional group and hence has insufficient ability of transmitting the stress to the matrix resin. On the other hand, when the acid anhydride component is contained in more than 10 % by weight, it gives various troubles on the production of ethylene copolymer, and hence, such a product can not practically be obtained by the present available technique. As to the requirement (iv), both of the $\alpha,\beta$-unsaturated carboxylic acid ester component and the acid anhydride component participate, and when both components are contained in a small amount, the copolymer is hardly microscopically dispersed. On the other hand, when both components are contained in a too large amount, the copolymer has too high affinity to the epoxy resin and becomes almost compatible in molecular level, and hence, the copolymer can not microscopically be dispersed within the matrix resin in a degree suitable for relieving the impact and the impact resistance of the product is not so improved.

The acid anhydride used in the present invention includes maleic anhydride, citraconic anhydride, etc. which are preferable in view of the copolymerizability with ethylene.

The $\alpha,\beta$-unsaturated carboxylic acid ester used in the present invention includes preferably $C_1$-$C_4$ alkyl esters of acrylic acid, such as methyl acrylate, ethyl acrylate, butyl acrylate, etc., and $C_1$-$C_4$ alkyl esters of methacrylic acid, such as methyl methacrylate, ethyl methacrylate, etc.

The component (a) in the present invention is a terpolymer which is prepared by copolymerizing the above acid anhydride, $\alpha,\beta$-unsaturated carboxylic acid ester and ethylene in the ratios as mentioned above, i.e. in such ratios that the acid anhydride-derived structure becomes in the range of 0.5 to 10 % by weight and the $\alpha,\beta$-unsaturated carboxylic ester-derived structure becomes in the range of 3 to 40 % by weight, in a usual manner, that is, by a radical reaction at a high temperature under high pressure using an apparatus which is usually used for the production of a low-density polyethylene. In Japan, a commercially available product thereof is "Bondine®" (sold by Sumika CDF, Ltd.). In view of the object and mechanism of the present invention, the process for preparing te component (a) is not necessarily limited to the above process.

The resin having an epoxy group used in the present invention includes any resins which are usually used as a component of the conventional epoxy resin coating composition, and includes, for example, aliphatic diglycidyl ethers, such as ethylene glycol diglycidyl ether, polyethylene glycol diglycidyl ether, neopentyl glycol diglycidyl ether, polypropylene glycol diglycidyl ether, etc.; aromatic diglycidyl ethers, such as bisphenol A type epoxy resins, bisphenol F type epoxy resins, etc.; aliphatic triglycidyl ethers, such as glycerin triglycidyl ether; aromatic polyglycidyl ethers, such as epoxy-novolac resin; acyclic aliphatic epoxy compounds, such as epoxylated oil; cyclic aliphatic epoxy compounds, such as dicyclopentadiene dioxide; and the like. These epoxy compounds have preferably an epoxy equivalent of 100 to 5,000.

The curing agent for epoxy resin used in the present invention includes polyesters having carboxyl terminus comprising as the main components an aromatic dicarboxylic acid, an aliphatic dicarboxylic acid and a polyhydric alcohol (said aromatic dicarboxylic acid includes phthalic acid, terephthalic acid, isophthalic acid, phthalic anhydride, etc.; said aliphatic dicarboxylic acid includes succinic acid, adipic acid, sebacic acid, azelaic acid, maleic anhydride, fumaric acid, itaconic acid, etc.; and said polyhydric alcohol includes ethylene glycol, propylene glycol, diethylene glycol, 1,3-butylene glycol, neopentyl glycol, butenediol, glycerin, trimethylolpropane, pentaerythritol, etc.); organic acid dihydrazides such as adipic acid dihydrazide (ADH), isophthalic acid dihydrazide (IDH), sebacic acid dihydrazide (SDH), etc.; dicyandiamide (DICY); aromatic amines such as diaminodiphenylmethane, aniline- formalin condensate, m-phenylenediamine, toluenediamine, etc.; acid anhydrides such as methyltetrahydrophthalic anhydride, methylnadic anhydride, methylhexahydrophthalic anhydride, hexahydrophthalic anhydride, polyazetic polyanhydride (PAPA), chlorendic anhydride (HET), phthalic anhydride, trimellitic anhydride (TMA), pyromellitic anhydride (PMDA), benzophenonetetracarboxylic anhydride (BTDA), ethylene glycol bistrimellitate (TMEG), etc.

In the composition of the present invention, when the ratio of (a)/(b) is less than 0.1, the product shows insufficient impact resistance, and on the other hand, when it is over 1.0, the composition shows a different structure, that is, the component (a) becomes the matrix, and hence, the composition has the same problem as the conventional thermoplastic anti-chipping coating composition. The component (a) is microscopically dispersed within the hard and brittle component (b) and the components (a) and (b) are reacted and strongly adhered each other, by which the desired properties of the desired composition of the present invention are exhibited.

The amount of the component (c) in the present invention varies largely depending on the kinds of the component (b) and the kinds of the component (c) and further is determined by the conditions for subsequent baking, and hence, it is hardly specified. In examples disclosed hereinafter, a standard range of amount is shown in a representative example where there are used Epotote YD902 (manufactured by Toto Seikei K.K.) as component (b), Epotote ZX798 (manufactured by Toto Seikei K.K.) as component (c), and Curezole 2MZ (manufactured by Shikoku Kasei K.K.), but the range of amount is not limited thereto.

The composition of the present invention can be used as a powder coating composition which is prepared by mixing and heat-melting the components (a), (b) and (c) with an extruder, various mixer, or the like, followed by pulverizing. In this procedure, the temperature for mixing and melting may vary depending on the kinds of the component (b), but preferably at a temperature of not higher than 120°C, for the purpose of keeping the component (b) in the semi-cured state or in the pre-cured state and completing the curing of the composition during the subsequent electrostatic baking and coating or fluidization dip coating.

The composition of the present invention may directly be applied to the substance to be coated with an extruder, or the like without being pulverized.

Moreover, the composition of the present invention may be used in the form of a solution coating composition where the components are dissolved in an organic solvent, or in the form of an emulsion coating composition where the components are emulsified and dispersed in water or an organic solvent.

The composition of the present invention may also be incorporated with various pigments for coloring and various inorganic substances as an extender pigment and further optionally with other additives, such as ultraviolet absorbers, antioxidants, lubricants, and the like.

Best Embodiments for practicing the Invention

The present invention is illustrated in more detail by the following examples, but should not be construed to be limited thereto.

Examples

The components of the compositions of the present invention prepared in Examples are shown in Table 1. The components (a), (b) and (c) as shown in Table 1 are mixed with stirring with Henschel mixer, and the mixture is extruded in the sheet-like form at 105 - 120°C with an extruder. After cooling, the product is roughly pulverized with a crusher and further finely pulverized with a mill to obtain powders having a particle size of 35 to 45 μm.

The powder thus prepared was coated on a primer-electrodeposited steel panel (70 mm x 150 mm) in a thickness of 200 μm with an electrostatic coating machine, followed by baking at 200°C for 20 minutes to give a test piece. Each test piece thus prepared was subjected to various tests. The results are shown in Table 3.

Reference Examples

The components of the compositions of the reference examples are shown in Table 2.

In the same manner as described in Examples except the composition was different, there were prepared test pieces, and the test pieces were subjected to the tests, likewise. The results are shown in Table 3.

Test methods

Test for chipping at an ordinary temperature:

Crush stones (6#, 500 g) were sprayed onto the test piece under a spray pressure of 5 kg/cm$^2$, which procedure was repeated 5 times, and the test piece was observed whether any peeling of the coated layer was present or not. The test piece having no peeling or cracking of the layer was evaluated as "o".

Test for chipping at -30°C:

The test piece cooled at -30°C was subjected to the test for chipping in the same manner as in the above test at an ordinary temperature. The test piece having no peeling or cracking of the layer was evaluated as "o".

Test for adhesion:

The test piece was slit in two lines with a width of 3 mm, and the T-peel strength per 3 mm width was measured. The test piece having a T-peel strength of 1 kg/3 mm width or more was evaluated as "o".

Test of flaw:

After being subjected to the test for chipping at the normal temperature, the test piece was observed as to the degree of flaw with naked eyes. The test piece having an unevenness of more than 0.3 mm in depth was evaluated as "x".

Table 1

| | Component (a) (% by weight) | Component (b) | Component (c) | (a)/(b) |
|---|---|---|---|---|
| Example 1 | Ethylene(91)-maleic anhydride(3) -ethyl acrylate(6) terpolymer | Epotote YD902[1] | Epotote ZX798[2] Curezole 2MZ[3] | 0.58 |
| Example 2 | The same above | The same above | The same above | 0.16 |
| Example 3 | Ethylene(68)-maleic anhydride(3) -ethyl acrylate(29) terpolymer | The same above | The same above | 0.58 |
| Example 4 | Ethylene(69)-maleic anhydride(1.7) -ethyl acrylate(29.3) terpolymer | The same above | The same above | 0.16 |

1) Epoxy resin manufactured by Toto Seikei K.K.
2) Phenol resin manufactured by Toto Seikei K.K., Japan which was used in an amount of 17.8 % by weight per total amount of the components (a), (b) and (c).
3) Curing catalyst manufactured by Shikoku Kasei K.K. which was used in an amount of 0.3 % by weight per total amount of the components (a), (b) and (c).

EP 0 404 960 A1

- 16 -

Table 2

| | Component (a) (% by weight) | Component (b) | Component (c) | (a)/(b) |
|---|---|---|---|---|
| Ref. Ex. 1 | Ethylene(91)-maleic anhydride(3) -ethyl acrylate(6) terpolymer | Epotote YD902[1] | Epotote ZX798[2] Curezole 2MZ[3] | 0.05 |
| Ref. Ex. 2 | The same above | The same above | The same above | 1.5 |
| Ref. Ex. 3 | Ethylene(91)-acrylic acid(9) copolymer | The same above | The same above | 0.58 |
| Ref. Ex. 4 | Ethylene(90)-ethyl acrylate(10) copolymer | The same above | The same above | 0.58 |
| Ref. Ex. 5 | Ethylene(90)-methyl methacrylate(10) copolymer | The same above | The same above | 0.58 |
| Ref. Ex. 6 | Ethylene(90)-methyl methacrylate(10) copolymer grafted with maleic anhydride(0.1) | The same above | The same above | 0.58 |
| Ref. Ex. 7 | Low-density polyethylene grafted with maleic anhydride(0.13) | The same above | The same above | 0.58 |

The marks are the same as in Table 1.

EP 0 404 960 A1

Table 3

| | Test items | | | |
|---|---|---|---|---|
| | Chipping at ordinary temp. | Chipping at -30°C | Adhesion | Flaw |
| Example 1 | o | o | o | o |
| " 2 | o | o | o | o |
| " 3 | o | o | o | o |
| " 4 | o | o | o | o |
| Ref. Ex. 1 | o | x | o | o |
| " 2 | o | o | x | x |
| " 3 | o | x | o | o |
| " 4 | o | x | x | o |
| " 5 | o | x | x | o |
| " 6 | o | x | o | o |
| " 7 | o | x | o | o |

As is clear from Table 3, the products in all Examples have no problem in all testings, but on the other hand, the products in Reference Examples have defects of anyone of cracking or flaw and are insufficient as an anti-chipping coating composition.

Probability of Industrial Use

Thus, the thermosetting resin composition and powder coating composition of the present invention are useful for coating underfloor parts of automobiles, building materials, various industrial materials, etc. which require corrosion protection and anti-chipping property.

CLAIMS

1. A thermosetting resin composition comprising the following components (a) to (c) wherein the ratio of (a)/(b) is in the range of 0.1 to 1.0 by weight:

(a) an ethylene copolymer containing 0.5 to 10 % by weight of a structure derived from a monomer having an acid anhydride group and 3 to 40 % by weight of a structure derived from an $\alpha,\beta$-unsaturated carboxylic acid ester monomer in the molecule,

(b) a resin having an epoxy group, and

(c) a curing agent for an epoxy resin.

2. A powder coating composition prepared from a thermosetting resin composition which comprises the following components (a) to (c) wherein the ratio of (a)/(b) is in the range of 0.1 to 1.0 by weight:

(a) an ethylene copolymer containing 0.5 to 10 % by weight of a structure derived from a monomer having an acid anhydride group and 3 to 40 % by weight of a structure derived from an $\alpha,\beta$-unsaturated carboxylic acid ester monomer in the molecule,

(b) a resin having an epoxy group, and

(c) a curing agent for an epoxy resin.

# INTERNATIONAL SEARCH REPORT

International Application No  PCT/JP89/01146

## I. CLASSIFICATION OF SUBJECT MATTER (if several classification symbols apply, indicate all) ⁶

According to International Patent Classification (IPC) or to both National Classification and IPC

Int. Cl$^4$    C08L63/00, 23/08, C09D3/58, 5/03

## II. FIELDS SEARCHED

### Minimum Documentation Searched ⁷

| Classification System | Classification Symbols |
|---|---|
| IPC | C08L23/00 - 23/36, 63/00 - 63/10, C09D3/58, 3/727 - 76, 5/03 |

### Documentation Searched other than Minimum Documentation to the Extent that such Documents are Included in the Fields Searched ⁸

| | |
|---|---|
| Jitsuyo Shinan Koho | 1926 - 1988 |
| Kokai Jitsuyo Shinan Koho | 1971 - 1988 |

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| X | JP, A, 60-112815 (Société Chimique des Charbonnages S.A.) 19 June 1985 (19. 06. 85) Claim 10 & FR, A, 2554112 & US, A, 4612349 | 1, 2 |
| A | JP, A, 53-41327 (Mitsubishi Rayon Co., Ltd.) 14 April 1978 (14. 04. 78) Claim (Family : none) | 1, 2 |
| A | JP, A, 52-12238 (Asahi Chemical Industry Co., Ltd.) 29 January 1977 (29. 01. 77) Claim (Family : none) | 1, 2 |

* Special categories of cited documents: ¹⁰

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance: the claimed invention cannot be considered novel or cannot be considered to involve an inventive step

"Y"  document of particular relevance: the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search | Date of Mailing of this International Search Report |
|---|---|
| November 30, 1989 (30. 11. 89) | December 11, 1989 (11. 12. 89) |

| International Searching Authority | Signature of Authorized Officer |
|---|---|
| Japanese Patent Office | |

Form PCT/ISA/210 (second sheet) (January 1985)